# EUROPÄISCHE PATENTSCHRIFT

(11) **EP 3 539 137 B1**
(45) Veröffentlichungstag und Bekanntmachung des Hinweises auf die Patenterteilung: **11.08.2021**
(21) Anmeldenummer: 17801654.9
(22) Anmeldetag: 10.11.2017
(51) Int. Cl.: G01B 11/25, G21C 17/06, G01B 11/255

(54) **VORRICHTUNG UND VERFAHREN ZUR ERFASSUNG UND/ODER UNTERSUCHUNG EINES ABTRAGES AN EINER OBERFLÄCHE EINES ZYLINDRISCHEN BAUTEILES**
DEVICE AND METHOD FOR DETECTING AND/OR EXAMINING AN ABRASION ON THE SURFACE OF A CYLINDRICAL COMPONENT
DISPOSITIF ET PROCÉDÉ DE DÉTECTION ET/OU D'ANALYSE D'UN ENLÈVEMENT SUR UNE SURFACE D'UN ÉLÉMENT STRUCTURAL CYLINDRIQUE

(30) Priorität: 11.11.2016 DE 102016121659
(43) Veröffentlichungstag der Anmeldung: 18.09.2019
(73) Patentinhaber: Framatome GmbH, 91052 Erlangen (DE)
(72) Erfinder: HUMMEL, Wolfgang, 92318 Neumarkt (DE)
(74) Vertreter: Lavoix
(86) Internationale Anmeldenummer: PCT/EP2017/078952
(87) Internationale Veröffentlichungsnummer: WO 2018/087328

(56) Entgegenhaltungen:
- JP-A- H0 593 615
- US-A- 4 801 207

## Beschreibung

Die Erfindung betrifft eine Vorrichtung und ein Verfahren zur Erfassung und/oder Untersuchung eines Abtrages an einer Oberfläche eines zylindrischen Bauteiles, insbesondere ein stabförmiges Bauteil eines Kernkraftwerkes oder eines in einem Kernkraftwerk eingesetzten Bauteils, insbesondere ein Brennstab, ein Steuerstab, ein Neutronenquellenstab, ein Absorberstab und/oder eine Lanze. An der Oberfläche zylindrischer oder stabförmiger Bauteile, die in einer nukleartechnischen Anlage bzw. in einem Kernkraftwerk zum Einsatz kommen, kann ein Schaden in Form eines Materialabtrages auftreten, beispielsweise plötzlich durch Abplatzen eines Stückes an der Oberfläche des Bauteils aufgrund von Temperaturschwankungen, Materialermüdungen, Materialüberbelastung oder kontinuierlich im Laufe des Betriebes der kerntechnischen Anlage, beispielsweise durch Materialkorrosion, Fredding oder Einwirkung durch einen zweiten Körper. Ein solcher Abtrag kann die Sicherheitsrelevanz des Bauteils und somit dessen Einsatzfähigkeit beeinträchtigen, sodass die Notwendigkeit besteht, das Ausmaß des Abtrages an der Oberfläche des Bauteils zu bewerten, um beurteilen zu können, ob das Bauteil weiter eingesetzt werden darf ohne den sicheren Betrieb der nukleartechnischen Anlage zu gefährden. Bei dieser Bewertung sind sowohl die Form des Abtrages als auch dessen Tiefe von Bedeutung.

Bisher ist es bekannt die Oberfläche des Bauteils in einem Bereich des Abtrages in Umfangsrichtung, also senkrecht oder quer zu der Längsachse des stabförmigen Bauteils abzutasten, beispielsweise mittels einer Tastspitze, die über die Oberfläche des Bauteils geführt wird. Durch rechnerische Bewertung der dabei erfassten Messwerte lässt sich eine Abweichung im Vergleich zu der kreisförmigen Einhüllenden des Bauteils im unbeschädigten Zustand und somit der Abtrag ermitteln. Diese Methode hat jedoch den Nachteil, dass das zu prüfende Bauteil von allen Seiten ausreichend zugänglich sein muss, um die Tastspitze über dessen Oberfläche führen zu können und dass die Tastspitze keinen unendlich kleinen Radius aufweist, u m das Bauteil nicht durch die Abtastung selbst zu beschädigen. Durch die Ausführung der Tastspitze mit endlich kleinem Radius können kantige Übergänge jedoch nu r annähernd abgetastet werden.

Darüber hinaus ist eine Methode bekannt, bei der durch Ausfüllen des Abtrages mit einem geeigneten Material ein Abdruck desselben erstellt wird, der nachfolgend im Labor mittels 3D-Messungen analysiert wird, um Form und/oder Tiefe des Abtrages zu ermitteln . Dieses Verfahren ist jedoch sehr zeitaufwendig, da der Abdruck z. B. im Brennelementlagerbecken eines Kernkraftwerkes vom Bauteil abgenommen werden muss und die Auswertung üblicherweise in einer heißen Zelle außerhalb des Kernkraftwerkes erfolgt.

US 4 801 207 A offenbart eine Vorrichtung mit einer Schlitzlichtquelle, die eine Stahlstange mit einem planen Lichtstrahl beleuchtet. Ferner ist eine Kamera vorgesehen, die diffus reflektiertes Licht von der Stahlstange aufnimmt. Die Kamera ist mit einer Bildverarbeitungsvorrichtung und einer Bildausgabeeinheit verbunden. JP H05 93615 A betrifft eine Vorrichtung, um den Querschnitt eines rechteckigen Stahlteils zu ermitteln. Dazu wird von einer Lichtquelle ein Schlitzlicht in einer Schlitzlichtebene erzeugt. Eine Kamera hat eine optische Achse, die senkrecht zu der Schlitzebene ist. Zudem ist die Schlitzlichtebene schräg in Bezug die Längsachse des Stahlteils angeordnet.

Es ist daher Aufgabe der Erfindung eine Vorrichtung und ein Verfahren anzugeben, mit der bzw. dem ein Abtrag an einer Oberfläche eines zylindrischen Bauteils zuverlässig und mit geringerem Aufwand erfasst und untersucht werden kann.

Die erstgenannte Aufgabe wird gelöst durch eine Vorrichtung mit den Merkmalen gemäß Anspruch 1 und ein Verfahren gemäß Anspruch 5.

Vorteilhafte Ausgestaltungen und Weiterbildungen sind in den jeweils abhängigen Ansprüchen angegeben.

Die Vorrichtung zur Erfassung und/oder Untersuchung eines Abtrages an einer Oberfläche eines zylindrischen Bauteils bzw. in einem Oberflächenbereich des zylindrischen Bauteils, insbesondere eines stabförmigen Bauteils eines Kernkraftwerkes oder eines in einem Kernkraftwerk eingesetzten Bauteils, insbesondere eines Brennstabes, eines Steuerstabes, eines Neutronenquellenstabes, eines Absorberstabes und/oder einer Lanze, umfasst eine Lichtquelle zur Projektion von Licht auf einen Oberflächenbereich des zylindrischen Bauteils. Ferner umfasst die Vorrichtung eine Bilderfassungseinheit, insbesondere eine Kamera zur Erfassung bzw. Aufnahme eines Bildes von dem Oberflächenbereich des zylindrischen Bauteils, auf welchen das Licht projiziert wird, und/oder zur Untersuchung des Oberflächenbereiches des zylindrischen Bauteils. Des Weiteren umfasst die Vorrichtung eine Auswerteeinheit zur Ermittlung des Ausmaßes eines Abtrages anhand einer Abweichung der tatsächlichen Oberfläche des in dem Bild erfassten Oberflächenbereichs von einer idealen zylindrischen Oberfläche des zylindrischen Bauteils. Die Lichtquelle ist dabei eine Spaltlampe, die Licht im Wesentlichen in einer Lichtstrahlebene auf das Bauteil emittiert. In Bezug auf das zylindrische Bauteil ist die Lichtquelle derart angeordnet, dass die Lichtstrahlebene senkrecht zu einer Längsachse des zylindrischen Bauteils orientiert ist. Die Bilderfassungseinheit ist während der Untersuchung eines Abtrages in einer ersten Ausrichtung positionierbar, und zwar derart, dass die optische Achse der Bilderfassungseinheit unter einem Winkel zu der Lichtstrahlebene der Lichtquelle orientiert bzw. ausgerichtet ist. Dabei ist die optische Achse ferner insbesondere derart orientiert, dass sie eine Mittellängsachse des zylindrischen Bauteils schneidet. Zudem ist die Bilderfassungseinheit vorzugsweise so ausgerichtet, dass das zylindrische Bauteil im Bild in senkrechter Lage dargestellt wird.

Zur Erfassung eines Abtrages, also zur Lokalisierung und/oder zum Auffinden eines Defektes oder Abtrages ist die Bilderfassungseinheit vorzugsweise zudem in einer zweiten Ausrichtung positionierbar, wobei in der zweiten Ausrichtung die optische Achse senkrecht zu der Längsachse des zylindrischen Bauteils und somit parallel zu der Lichtstrahlebene der Lichtquelle orientiert ist. Sowohl die erste Ausrichtung als auch die zweite Ausrichtung der Bilderfassungseinheit sind variierbar, sodass verschiedene Winkel unter dem die optische Achse die Lichtstrahlebene schneidet, realisiert und verschiedene Längsabschnitte des zylindrischen Bauteils erfasst werden können. Die Bilderfassungseinheit ist also verschiebbar und/oder drehbar angeordnet, beispielsweise an einer Haltevorrichtung an einem Brennelementlagerbecken.

Mit der Vorrichtung soll also ein (Material-) Abtrag, der an einer Oberfläche bzw. Mantelfläche eines zylindrischen Bauteils aufgetreten ist, optisch erfasst und insbesondere auch genauer untersucht und bewertet werden. Sofern die Oberfläche des zylindrischen Bauteils einen Abtrag aufweist, sollen sowohl die Tiefe als auch die Kontur oder Form des Abtrages analysiert werden. Hierzu wird das Licht auf den Bereich der Oberfläche, welcher zumindest einen Teil des Abtrages aufweist bzw. umfasst, also auf die Abtragstelle bzw. zumindest einen Teil der Abtragstelle projiziert. Von dem Oberflächenbereich, welcher von der Lichtquelle beleuchtet wird, wird anschließend eine Aufnahme von der Bilderfassungseinheit aufgenommen.

Die Idee besteht darin, als Lichtquelle eine Spaltlampe einzusetzen, die Licht im Wesentlichen in einer Lichtstrahlebene emittiert, d.h. die Lichtquelle erzeugt und emittiert einen scharf begrenzten spaltförmigen Lichtstrahl. Der Oberflächenbereich, auf welchen das Licht mit der Spaltlampe projiziert wird, ist somit ebenfalls schmal und erstreckt sich vorwiegend in Umfangsrichtung entlang der Oberfläche des zylindrischen Bauteils. Der Sichtbereich der Bilderfassungseinheit bzw. Kamera schließt einen Teilbereich (Umfangswinkel) des Lichtstrahls der Lichtquelle auf das zylindrische Bauteil ein. Dadurch ergibt sich der Vorteil, dass die räumliche Ausdehnung des projizierten Lichtstrahles auf dem von der Kamera erfassten Bild möglichst gut zu erkennen ist. In dem Bild stellt sich der projizierte Lichtstrahl auf der Mantelfläche bzw. in einem abtragsfreien und somit unbeschädigten Bereich der Oberfläche des zylindrischen Bauteils als Ellipse dar. In Bereichen, in welchen ein Abtrag stattgefunden hat, weicht die tatsächliche Oberfläche von der idealen zylindrischen Mantelfläche ab, sodass auch das Bild des projizierten Lichtstrahls von der Form einer Ellipse abweicht. Anhand dieser Abweichung des projizierten Lichtstrahles von der idealen Ellipsenform, lässt sich das Ausmaß des Abtrages, also insbesondere eine Tiefe und/oder Kontur des Abtrages ermitteln.

Die Bilderfassungseinheit ist hierfür in Bezug auf die Lichtquelle derart angeordnet, dass die optische Achse der Bilderfassungseinheit die Lichtstrahlebene unter einem solchen Winkel schneidet, dass sich ein Abtrag mit großer Tiefe vollständig in dem Bild darstellen lässt, ohne, dass der projizierte Lichtstrahl durch Kanten oder Vorsprünge des den Abtrag umgebenden Oberflächenbereiches überdeckt wird. Je tiefer der Abtrag desto flacher wird somit der Winkel zwischen Bilderfassungseinheit und Lichtstrahlebene gewählt. Je mehr sich der Abtrag in Längsrichtung des zylindrischen Bauteils erstreckt, desto größer kann der Winkel sein, was die Auswertung des Ausmaßes des Abtrages erleichtert. Als vorteilhaft lässt sich ein Winkel in einem Bereich von etwa 30°-50°C angeben, sowohl für eine Blickrichtung der Bilderfassungseinheit von schräg unten als auch von schräg oben, da hier die Ellipsenform eine hinreichend große Gestalt annimmt, was die Auswertung vereinfacht und der projizierte Lichtstrahl dennoch nicht wesentlich durch Kanten oder Vorsprünge verdeckt wird. In Bezug auf das zylindrische Bauteil sind die Bilderfassungseinheit und die Lichtquelle seitlich versetzt positioniert. Die Vorrichtung ist dabei entlang der Längsachse bzw. in horizontaler Richtung, und in Umfangsrichtung bzw. in vertikaler Richtung des zylindrischen Bauteils variabel positionierbar, also in verschiedene Positionen in Längsrichtung und in Umfangsrichtung des zylindrischen Bauteils - soweit zugänglich - verschiebbar, um Oberflächenbereiche bzw. Abtragstellen in unterschiedlichen Längsabschnitten des zylindrischen Bauteils prüfen zu können.

Zur Untersuchung des Oberflächenbereiches bzw. zur Ermittlung des Ausmaßes des Schadens, also insbesondere zur Bestimmung einer Tiefe und/oder Kontur des Abtrages, ist als Teil der Vorrichtung eine Auswerteeinheit vorgesehen. Die Auswerteeinheit zur Auswertung der Aufnahmen bzw. Bildinformationen ist üblicherweise als separater Rechner ausgebildet. Die Aufnahmen der Bilderfassungseinheit werden in der Auswerteeinheit unter Berücksichtigung der geometrischen Anordnung der Bilderfassungseinheit, der Lichtquelle und des zylindrischen Bauteils zueinander photogrammetrisch ausgewertet und analysiert.

Ein weiterer Vorteil der Vorrichtung besteht darin, dass als Bilderfassungseinheit vor Ort bereits vorhandene Kameras eingesetzt werden können, die für die visuelle Inspektion bereits benutzt werden, sodass der gerätetechnische Aufwand und somit die Kosten gering sind. Die Verwendung einer Spaltlampe hat zudem den Vorteil, dass der Schaden bzw. die Abtragstelle innerhalb der Lichtstrahlebene selbst bei leichten Hinterschneidungen eine sehr gute und beispielsweise gegenüber der Verwendung eines Lasers deutlich verbesserte Ausleuchtung aufweist.

Wie bereits erwähnt, ist die Lichtquelle in Bezug auf das zylindrische Bauteil vorzugsweise derart angeordnet, dass die Lichtstrahlebene senkrecht zu einer Längsachse des zylindrischen Bauteiles orientiert ist. Das auf die Oberfläche des zylindrischen Bauteils projizierte Licht bzw. der auf die Oberfläche des zylindrischen Bauteils projizierte Lichtstrahl erstreckt sich somit in einer senkrecht zu der Längsachse verlaufenden Querrichtung des zylindrischen Bauteils und der Oberflächenbereich auf welchen das Licht projiziert wird ist die Mantellinie des Bauteils. Im Falle eines abtragsfreien bzw. unbeschädigten Oberflächenbereiches stellt sich der auf die Oberfläche des zylindrischen Bauteils projizierte Lichtstrahl in dem von der Kamera erfassten Bild somit als Teil einer Ellipse dar. Anhand einer Abweichung der Aufnahme der Oberfläche von der Ellipsenform, lassen sich Schäden bzw. ein Abtrag an der Oberfläche erkennen, dessen Ausmaß sich durch geometrische und/oder mathematische Überlegungen genauer bestimmen lässt.

Ferner ist die Lichtquelle bei einer bevorzugten Ausführungsform in Bezug auf das zylindrische Bauteil derart angeordnet, dass die Lichtstrahlebene das zylindrische Bauteil in einer Umfangsrichtung bzw. in Querrichtung vollständig erfasst.

Bei einer weiteren bevorzugten Ausführungsform, ist die Bilderfassungseinheit in Bezug auf die Lichtquelle derart angeordnet, dass eine senkrechte Projektion der optischen Achse der Bilderfassungseinheit auf die Lichtstrahlebene deckungsgleich mit einer Mittellängsachse der Lichtstrahlebene der Lichtquelle verläuft. Bilderfassungseinheit und Lichtquelle sind also - bezogen auf eine Längsrichtung des zylindrischen Bauteils - übereinander angeordnet. Die Bilderfassungseinheit ist somit mittig zu dem von der Lichtquelle beleuchteten Oberflächenbereich angeordnet, was sowohl für die Aufnahme des Bildes als auch bei der Bestimmung des Ausmaßes des Abtrages vorteilhaft ist.

Ferner ist es von Vorteil, wenn die Bilderfassungseinheit in einem Abstand zu dem zylindrischen Bauteil, genauer gesagt zu dessen Oberfläche und/oder in einem Abstand zu der Lichtstrahlebene bzw. der Lichtquelle derart angeordnet ist, dass der Oberflächenbereich auf welchen der Lichtstrahl projiziert wird und/oder das zylindrische Bauteil in einer senkrecht zu dessen Längsachse orientierten Querrichtung vollständig in dem Bild der Kamera abbildbar ist. Mit anderen Worten: Der auf die Oberfläche projizierte Lichtstrahl liegt in diesem Fall vollständig im Sichtfeld der Bilderfassungseinheit, wobei das zylindrische Bauteil in Querrichtung zudem möglichst bildfüllend angeordnet ist.

Um den Einfall von Störlicht aus der Umgebung zu reduzieren, ist bei einer bevorzugten Weiterbildung vorgesehen, dass die Lichtquelle und die Kamera innerhalb eines Gehäuses, vorzugsweise innerhalb eines gemeinsamen Gehäuses angeordnet sind, welches auf einer dem zylindrischen Bauteil zugewandten Seite in einem Sichtfeld der Kamera und/oder entlang der Lichtstrahlebene des von der Lichtquelle emittierten Lichtstrahles eine Öffnung und/oder einen lichtdurchlässigen Bereich aufweist. Um eine Prüfung unter Wasser, beispielsweise die Prüfung eines Brennstabes in einem Brennelementlagerbecken zu ermöglichen, sind sowohl die Kamera als auch die Lichtquelle bereits wasserdicht ausgebildet. Es wäre jedoch auch vorstellbar, die beiden Komponenten in einem gemeinsamen, wasserdichten Gehäuse anzuordnen.

Die zweitgenannte Aufgabe wird gelöst durch ein Verfahren mit den Merkmalen gemäß Anspruch 6. Vorteilhafte Ausgestaltungen und Weiterbildungen sind in den jeweils abhängigen Ansprüchen angegeben.

Bei dem Verfahren zur Erfassung und/oder Untersuchung eines Abtrages an einer Oberfläche eines zylindrisches Bauteils bzw. in einem Oberflächenbereiches des zylindrisches Bauteils, insbesondere eines stabförmigen Bauteils eines Kernkraftwerkes oder eines in einem Kernkraftwerk eingesetzten Bauteils, insbesondere eines Brennstabes, eines Steuerstabes, eines Neutronenquellenstabes, eines Absorberstabes und/oder eine Lanze, wird insbesondere eine Vorrichtung mit den vorstehend beschriebenen Merkmalen eingesetzt, wobei mit einer Lichtquelle Licht erzeugt und auf einen Oberflächenbereich des zylindrischen Bauteils projiziert wird, und wobei eine Bilderfassungseinheit ein Bild von dem Oberflächenbereich des zylindrischen Bauteils erfasst, auf welchen das Licht projiziert wird. Dabei ist die Lichtquelle eine Spaltlampe, die Licht in einer Lichtstrahlebene emittiert, wobei die Lichtstrahlebene senkrecht zu einer Längsachse des zylindrischen Bauteils orientiert ist. Die optische Achse der Bilderfassungseinheit ist zumindest in einer ersten Ausrichtung unter einem Winkel zu der Lichtstrahlebene der Spaltlampe orientiert. Ein Ausmaß eines Abtrages wird dabei mit einer Auswerteeinheit anhand einer Abweichung der tatsächlichen Oberfläche des in dem Bild erfassten Oberflächenbereichs von einer idealen zylindrischen Oberfläche des zylindrischen Bauteils ermittelt.

Die Auswerteeinheit ist dafür eingerichtet, anhand eines in dem Bild erfassten abtragsfreien Teilabschnittes eine die Oberfläche des zylindrischen Bauteils in einem Soll-Zustand abbildende Funktion zu ermitteln.

Durch die Verwendung einer Spaltlampe, mit der wie bereits erwähnt aufgrund der Emission des Lichts in einer Lichtstrahlebene eine gute Ausleuchtung des Schadens bzw. der Abtragstelle trotz möglicher Kanten oder Vorsprünge erreicht wird, ist das Verfahren insbesondere für die Erfassung und/oder Analyse von Materialabträgen, die frontal zur Betrachtungsrichtung liegen und vornehmlich eine Ausbreitung entlang der Längsachse des zylindrischen Bauteils aufweisen, geeignet.

Bei einer vorteilhaften Ausgestaltung werden der Oberflächenbereich auf welchen das Licht projiziert wird und/oder das zylindrische Bauteil in einer senkrecht zu der Längsachse orientierten Querrichtung in dem Bild der Bilderfassungseinheit vollständig erfasst.

Bei dem Verfahren wird die Lichtquelle vorzugsweise derart positioniert, dass der mit der Lichtquelle beleuchtete und mit der Bilderfassungseinheit erfasste Oberflächenbereich zumindest einen abtragsfreien, unbeschädigten Teilabschnitt bzw. Teilbereich aufweist.

Anhand des von der Bilderfassungseinheit erfassten Bildes eines abtragsfreien Teilabschnittes wird eine die Oberfläche des zylindrischen Bauteils in einem Soll-Zustand abbildende Funktion, insbesondere eine Ellipsenfunktion ermittelt. Unter Soll-Zustand ist dabei die Oberfläche bzw. Mantelfläche des zylindrischen Bauteils in dem Oberflächenbereich in einem unbeschädigten Zustand zu verstehen. Zunächst erfolgt eine photogrametrische Abstrahierung (Helligkeitsunterschiede) der projizierten Bildpunkte aus der Bildinformation. Die Ermittlung der Ellipsenfunktion erfolgt anschließend mittels bekannter mathematischer Fittingoperationen der Bildpunkte. Um die Richtigkeit der Berechnung visuell zu bestätigen, kann die Ellipsenfunktion zunächst in das Bild rückprojiziert werden. Anhand dieser Funktion lässt sich für jede Position des Oberflächenbereiches ein Außenradius ermitteln, welchen das zylindrische Bauteil in der Bilddarstellung im unbeschädigten Zustand aufweist oder aufweisen würde, und der nachfolgend als Soll-Radius des zylindrischen Bauteils bezeichnet wird. Die Ellipsenfunktion beschreibt also die unbeschädigte Oberfläche des Bauteils in dessen Umfangsrichtung. Der Außenradius bzw. Soll-Radius wird jeweils ausgehend von dem Zentrum der Ellipse in Radialrichtung ermittelt.

Bei einer vorteilhaften Weiterbildung wird aus der die Oberfläche des zylindrischen Bauteils in einem unbeschädigten Zustand abbildenden Funktion, insbesondere der Ellipsenfunktion und/oder dem jeweiligen Soll-Radius des zylindrischen Bauteils in der Bilddarstellung und einem realen Soll-Radius des zylindrischen Bauteils ein Kalibrierfaktor für das Verhältnis zwischen dem Soll-Radius in der Bilddarstellung und dem realen Soll-Radius ermittelt. Unter realem Soll-Radius ist dabei der Außenradius des zylindrischen Bauteils in unbeschädigtem Zustand und in Realdarstellung, also dessen tatsächlicher Außenradius zu verstehen, welcher für die gesamte Umfangsfläche des zylindrischen Bauteils konstant ist. Der tatsächliche Außenradius bzw. der reale Soll-Radius ist bekannt, beispielsweise aus Konstruktionsplänen des Kernkraftwerkes, Bauteil- bzw. Komponentenzeichnungen oder ähnlichem.

Wie bereits beschrieben, wird die Lichtquelle vorzugsweise derart positioniert, dass der beleuchtete und erfasste Oberflächenbereich zumindest einen Abtrag aufweisenden, also einen beschädigten Teilabschnitt bzw. Teilbereich aufweist. Anhand des von der Bilderfassungseinheit erfassten Bildes des beschädigten Teilabschnittes wird an zumindest einer Position des beschädigten Teilabschnittes ein Ist-Radius ermittelt. Anhand eines für diese Position ermittelten Kalibrierfaktors wird anschließend ein dem Ist-Radius in der Bilddarstellung entsprechender realer Ist-Radius des zylindrischen Bauteils ermittelt. Unter Ist-Radius ist also der lokale Au-βenradius des zylindrischen Bauteils an der Position bzw. an der Abtragstelle in der Bilddarstellung zu verstehen, unter realem Ist-Radius der lokale Außenradius des zylindrischen Bauteils in Ist-Zustand bzw. in beschädigtem Zustand und in Realdarstellung, also dessen tatsächlicher Au-ßenradius an der Position bzw. der Abtragstelle. Aus dem bekannten, realen Soll-Radius des zylindrischen Bauteils und dem ermittelten realen Ist-Radius lässt sich die Tiefe des Abtrages an dieser Position in Radialrichtung ermitteln.

Um das Ausmaß des Abtrages, also eine Kontur bzw. Form des Abtrages in Längsrichtung und Querrichtung des zylindrischen Bauteils zu untersuchen bzw. zu ermitteln, ist bei einer bevorzugten Ausführungsform des Verfahrens vorgesehen, dass ein realer Ist-Radius für zumindest zwei in Querrichtung voneinander beabstandete Positionen und/oder für zumindest zwei Positionen, die in in Längsrichtung voneinander beabstandeten Ebenen liegen, ermittelt wird. Zur Ermittlung des Ist-Radius an den verschiedenen Positionen ist lediglich ein Bild erforderlich, anhand dessen mittels geeigneter Auswertesoftware mehrere Ist-Radien in unterschiedlichen Ebenen und Positionen ermittelt werden. Je mehr Positionen und Ebenen hierbei herangezogen werden, desto genauer kann eine Analyse des Abtrages erfolgen.

Sofern die Wandstärke des zylindrischen Bauteils in Soll-Zustand, also eine Soll-Wandstärke, und/oder der reale Innenradius bei hohlzylindrischen Bauteilen, wie beispielsweise Hüllrohren, bekannt ist, lässt sich mit dem Verfahren zusätzlich die tatsächliche Wandstärke an der Abtragstelle, also eine Ist-Wandstärke ermitteln, woraus insbesondere sicherheitsrelevante, lokale Schwächungen des zylindrischen Bauteils erkennbar sind.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in einer schematischen Darstellung:
- FIG 1: eine Vorrichtung zur Erfassung und Untersuchung eines Abtrages an einer Oberfläche eines Brennstabes,
- FIG 2: ein Querschnitt der Vorrichtung und des Abtrages des Brennstabes aus Fig. 1 entlang der Lichtstrahlebene E,
- FIG 3: ein von der Bilderfassungseinheit erfasstes Bild des Abtrages des Brennstabes aus Fig. 2.

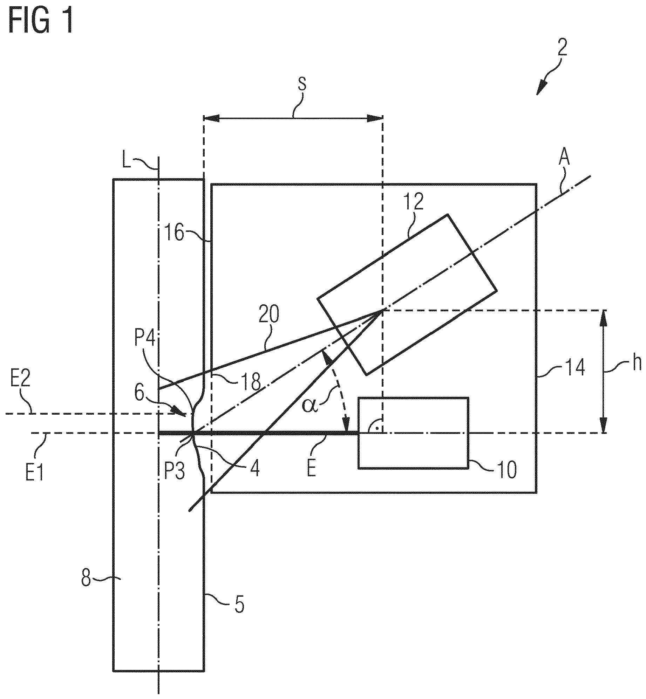

Fig. 1 zeigt eine Vorrichtung 2 zur Erfassung und Untersuchung eines Abtrages 4, der an der Oberfläche 5 eines zylindrischen Bauteils 8 aufgetreten ist. Das zylindrische Bauteil 8 ist vorliegend ein Brennstab eines Druckwasserreaktors. Die Vorrichtung 2 umfasst eine Lichtquelle 10, welche Licht auf einen Oberflächenbereich 6 des zylindrischen Bauteils 8 projiziert, in welchem der Abtrag 4 stattgefunden hat. Die Lichtquelle 10 ist eine Spaltlampe, die Licht in einer Lichtstrahlebene E emittiert und damit den Oberflächenbereich 6 ausleuchtet. Zur Erfassung eines Bildes des Oberflächenbereiches 6, welcher von dem Lichtstrahl beleuchtet wird, weist die Vorrichtung 2 eine Bilderfassungseinheit 12 in Form einer Kamera auf. Die optische Achse A der Bilderfassungseinheit 12 ist unter einem Winkel α zu der Lichtstrahlebene E orientiert. Vorliegend beträgt der Winkel α etwa 35°. Die Bilderfassungseinheit 12 ist ferner in einem Abstand h oberhalb der Lichtstrahlebene E angeordnet, wobei der Abstand h auf den Punkt, in dem die optische Achse A der Bilderfassungseinheit 12 eine äußere Oberfläche des Objektivlinsensystems der Bilderfassungseinheit 12 schneidet, bezogen ist. Ferner umfasst die Vorrichtung eine in Fig. 1 nicht explizit dargestellt Auswerteeinheit zur Ermittlung des Ausmaßes eines Abtrages 4 anhand einer Abweichung der tatsächlichen Oberfläche des in dem Bild erfassten Oberflächenbereichs von einer idealen zylindrischen Oberfläche des zylindrischen Bauteils 8. Die Auswerteeinheit ist beispielsweise ein separater Rechner, der mit der Bilderfassungseinheit 12 verbunden ist.

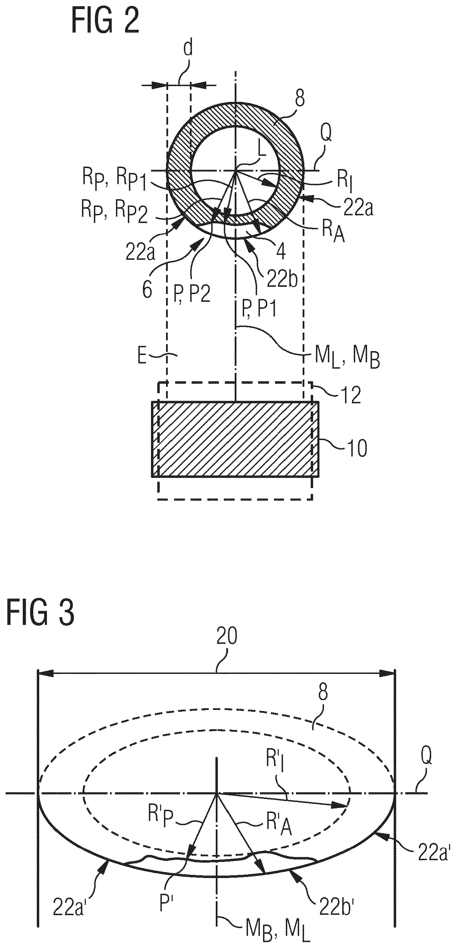

In Bezug auf das zylindrische Bauteil 8 ist die Lichtquelle 10 derart angeordnet, dass der von ihr emittierte Lichtstrahl bzw. die Lichtstrahlebene E, welche in Fig. 1 die Papierebene senkrecht schneidet, senkrecht zu einer Längsachse L bzw. einer Längsrichtung L des Bauteils 8 orientiert ist. Ferner ist die Lichtquelle 10 in Bezug auf das zylindrische Bauteil 8 derart angeordnet, dass die Lichtstrahlebene E das zylindrische Bauteil 8 in einer Querrichtung Q vollständig erfasst bzw. das zylindrische Bauteil 8 vollständig ausleuchtet (vgl. Fig. 2).

Die Bilderfassungseinheit 12 ist vorliegend bezogen auf die Längsrichtung L des Bauteils 8 derart angeordnet, dass eine senkrechte Projektion M_{B} der optischen Achse A der Bilderfassungseinheit 12 auf die Lichtstrahlebene E deckungsgleich mit einer Mittellängsachse ML der Lichtstrahlebene verläuft (vgl. Fig. 2). Die Bilderfassungseinheit 12 ist also gegenüber dem von der Lichtquelle 10 beleuchtetem Oberflächenbereich 6 mittig angeordnet.

Zu dem zylindrischen Bauteil 8, genauer gesagt zu dessen Oberfläche 5, weist die Bilderfassungseinheit 12 einen Abstand s - wiederum bezogen auf den Punkt, in dem die optische Achse A der Bilderfassungseinheit 12 eine äußere Oberfläche des Objektivlinsensystems der Bilderfassungseinheit 12 schneidet - auf. Der Abstand s und der Abstand h werden dabei in Abhängigkeit von der Abtragstelle 4 bzw. dem von der Lichtquelle 10 beleuchteten Oberflächenbereich 6 derart gewählt, dass sowohl der Oberflächenbereich 6 in Längsrichtung L des Bauteils 8 als auch das zylindrische Bauteil 8 in einer senkrecht zu der Längsachse L des Bauteils 8 orientierten Querrichtung Q vollständig in einem Sichtbereich 20 der Bilderfassungseinheit 12 liegen. Dabei wird sichergestellt, dass die gesamte Abtragstelle 4 sowie ein diese umgebender abtragsfreier Teilabschnitt vollständig in dem Bild der Bilderfassungseinheit 12 abbildbar ist.

Um den Einfall von Störlicht zu reduzieren sind die Lichtquelle 10 und die Bilderfassungseinheit 12 innerhalb eines gemeinsamen Gehäuses 14 angeordnet, welches lediglich an dessen vorderer Stirnseite 16, welche dem zylindrischen Bauteil 8 zugewandt ist, eine Öffnung 18 aufweist, die in dem Sichtfeld 20 der Bilderfassungseinheit 12 und entlang der Lichtstrahlebene E des von der Lichtquelle 10 emittierten Lichtes liegt.

Mit der Vorrichtung wird eine Abtragstelle 4 bzw. ein Abtrag 4, der an der Oberfläche 5 des zylindrischen Bauteils 8 erfasst und untersucht bzw. hinsichtlich des Ausmaßes, also Tiefe und Breite bzw. Kontur analysiert und im Hinblick auf sicherheitsrelevante Aspekte bewertet. Mit der Lichtquelle 10, erfindungsgemäß eine Spaltlampe, die Licht im Wesentlichen in der Lichtstrahlebene E emittiert, die vorliegend senkrecht zu der Längsachse des Bauteils 8 orientiert ist, wird Licht auf den Oberflächenbereich 6 des zylindrischen Bauteils 8 projiziert, welcher den Abtrag 4 aufweist. Mittels der Bilderfassungseinheit 12 bzw. der Kamera - in Fig. 2 gestrichelt dargestellt - wird ein Bild von dem Oberflächenbereich 6 erfasst, auf welchen das Licht projiziert wird. In dem Bild - welches in Fig. 3 gezeigt ist, ist der gesamte Oberflächenbereich 6 auf welchen das Licht projiziert wird sowohl in Längsrichtung L als auch in Querrichtung Q erfasst. Das zylindrische Bauteil 8 befindet sich in Querrichtung Q vollständig in dem Sichtfeld 20 der Bilderfassungseinheit 12, um auch abtragsfreie Teilabschnitte 22a in dem Bild zu erfassen. Aufgrund der Orientierung der Bilderfassungseinheit 12 gegenüber der Lichtstrahlebene E unter dem Winkel α stellt sich das zylindrische Bauteil 8 bzw. dessen Oberfläche 5, welches wie in Fig. 2 gezeigt in Realdarstellung einen kreisförmigen Querschnitt aufweist, als Ellipse bzw. als Teil einer Ellipse dar.

Der Oberflächenbereich 6 weist in dem Bild beispielhaft zwei abtragsfreie Teilabschnitte 22a' auf, die die Abtragstelle 4 bzw. den beschädigten Teilabschnitt 22b' zwischen sich einschließen. Anhand der abtragsfreien Teilabschnitte 22a' lässt sich mittels bekannter photogrammetrischer und mathematischer Methoden eine die Oberfläche 5 des zylindrischen Bauteils 8 in einem Soll-Zustand, also in einem unbeschädigten Zustand abbildende Ellipsenfunktion ermitteln. Diese ist in Fig. 3 durch eine durchgezogene Linie, welche zugleich dem Außenradius R'_{A} des Bauteils 8 in einem unbeschädigten Zustand, also einem Soll-Radius in der Bilddarstellung entspricht, gezeigt. Die Ellipsenfunktion wird dabei jeweils für verschiedene in Längsrichtung voneinander beabstandete Ebenen E1, E2 ermittelt.

Ein realer Soll-Radius R_{A} des Bauteils 8, also ein tatsächlicher Außenradius des Bauteils 8 ist bekannt und über das gesamte Bauteil aufgrund der zylindrischen Form bzw. des kreisförmigen Querschnittes konstant. Aus der die Oberfläche 5 des zylindrischen Bauteils 8 in dem Soll-Zustand abbildenden Ellipsenfunktion und dem realen Soll-Radius R_{A} des zylindrischen Bauteils 8 lässt sich für jede Radialrichtung und in jeder Ebene bezogen auf die Längsrichtung L ein Kalibrierfaktor für das Verhältnis zwischen einem Soll-Radius R'_{A} in der Bilddarstellung und dem realen Soll-Radius R_{A} ermitteln.

Zur Untersuchung des Abtrages 4 wird anschließend in der Bilddarstellung des Oberflächenbereiches 6 an einer Position P', welche innerhalb der Abtragstelle 4, also in einem beschädigten Teilabschnitt 22b liegt, ein Ist-Radius R'ₚ ermittelt. Unter Berücksichtigung des zuvor ermittelten Kalibrierfaktors für die Position P' wird ein dem Ist-Radius R'_{P} in der Bilddarstellung entsprechender realer Ist-Radius Rₚ des zylindrischen Bauteils 8 an der Position P ermittelt. Die Position P', P kennzeichnet dabei die bezogen auf eine Radialrichtung hintereinander liegenden Punkte, als Kalibrierfaktor wird somit der für diese Radialrichtung ermittelte Kalibrierfaktor ermittelt.

Um die Kontur der Abtragstelle 4 zu analysieren, werden mittels der vorstehend beschriebenen Methode zumindest zwei reale Ist-Radien R_{P1}, R_{P2}, für zwei in Querrichtung Q voneinander beabstandete Positionen P1, P2 ermittelt, wodurch sich eine Breite des Abtrages 4 genauer bestimmen lässt. Ferner wird für zumindest zwei Positionen P3, P4, die in in Längsrichtung voneinander beabstandeten Ebenen E1, E2 liegen, ein realer Ist-Radius ermittelt.

Anhand der Wandstärke d des zylindrischen Bauteils 8 im Soll-Zustand, also eine Soll-Wandstärke, und dem realen Innenradius R_{I} des Bauteiles 8, lässt sich ferner die tatsächliche Wandstärke an der Abtragstelle, also eine Ist-Wandstärke ermitteln, woraus lokale Schwächungen des zylindrischen Bauteils erkennbar sind.

### Bezugszeichenliste

- 2: Vorrichtung
- 4: Abtragstelle
- 5: Oberfläche
- 6: Oberflächenbereich
- 8: zylindrisches Bauteil
- 10: Lichtquelle
- 12: Bilderfassungseinheit
- 14: Gehäuse
- 16: Seite des Gehäuses
- 18: Öffnung
- 20: Sichtfeld der Kamera
- 22a: unbeschädigter Teilbereich
- 22a': unbeschädigter Teilbereich in Bilddarstellung
- 22b: beschädigter Teilbereich
- 22b': beschädigter Teilbereich in Bilddarstellung

- E: Lichtstrahlebene
- A: optische Achse der Kamera
- α: Winkel zwischen optischer Achse und Lichtstrahlebene
- L: Längsachse des Bauteils
- Q: Querrichtung des Bauteils
- ML: Mittellängsachse der Lichtstrahlebene
- M_{B}: senkrechte Projektion der optischen Achse auf die Lichtstrahlebene
- h: vertikaler Abstand der Kamera von der Lichtstrahlebene
- s: horizontaler Abstand der Kamera von der Oberfläche des zylindrischen Bauteils
- R_{I}: Innenradius zylindrisches Bauteil
- R_{A}: Soll-Außenradius zylindrisches Bauteil
- R'_{I}: Innenradius zylindrisches Bauteil in Bilddarstellung
- R'_{A}: Soll-Außenradius zylindrisches Bauteil in Bilddarstellung
- R_{P},: Ist-Außenradius zylindrisches Bauteil
- R'_{P}: Ist-Außenradius zylindrisches Bauteil in Bilddarstellung
- K: Kalibrierfaktor
- d: Wandstärke des zylindrischen Bauteils
- d': Wandstärke des zylindrischen Bauteils in Bilddarstellung
- P: Position

## Patentansprüche

1. Vorrichtung (2) zur Erfassung und/oder Untersuchung eines Abtrages (4) an einer Oberfläche eines zylindrischen Bauteils (8), insbesondere eines stabförmigen Bauteils eines Kernkraftwerkes, insbesondere eines Brennstabes, eines Steuerstabes, eines Neutronenquellenstabes, eines Absorberstabes und/oder einer Lanze, umfassend
- eine Lichtquelle (10) zur Projektion von Licht auf einen Oberflächenbereich (6) des zylindrischen Bauteils (8), wobei die Lichtquelle (10) eine Spaltlampe ist, die Licht in einer Lichtstrahlebene (E) emittiert, und die Lichtquelle (10) in Bezug auf das zylindrische Bauteil (8) derart angeordnet werden kann, dass die Lichtstrahlebene (E) senkrecht zu einer Längsachse (L) des zylindrischen Bauteiles (8) orientiert ist, und
- eine Bilderfassungseinheit (12), insbesondere eine Kamera zur Erfassung eines Bildes des Oberflächenbereiches (6) auf welchen Licht projiziert wird, und/oder zur Untersuchung des Oberflächenbereiches (6) des zylindrischen Bauteils (8), wobei die optische Achse (A) der Bilderfassungseinheit (12) unter einem Winkel (a) zu der Lichtstrahlebene (E) der Lichtquelle(10) orientiert ist, **dadurch gekennzeichnet, dass** die Vorrichtung (2) eine Auswerteeinheit zur Ermittlung des Ausmaßes eines Abtrages (4) anhand einer Abweichung der tatsächlichen Oberfläche des in dem Bild erfassten Oberflächenbereichs (6) von einer idealen zylindrischen Oberfläche des zylindrischen Bauteils (8) umfasst, wobei die Auswerteeinheit dafür eingerichtet ist, anhand eines in dem Bild erfassten abtragsfreien Teilabschnittes (22a') eine die Oberfläche des zylindrischen Bauteils (8) in einem Soll-Zustand abbildende Funktion zu ermitteln.

2. Vorrichtung (2) nach einem der Ansprüche 1, wobei die Bilderfassungseinheit (12) in Bezug auf die Lichtquelle (10) derart angeordnet ist, dass eine senkrechte Projektion (M_{B}) der optischen Achse (A) der Bilderfassungseinheit (12) auf die Lichtstrahlebene (E) deckungsgleich mit einer Mittellängsachse (M_{L}) der Lichtstrahlebene (E) der Lichtquelle (10) verläuft.

3. Vorrichtung (2) nach einem der vorhergehenden Ansprüche, wobei die Bilderfassungseinheit (12) in einem Abstand (s) zu dem zylindrischen Bauteil (8) und/oder in einem Abstand (h) zu der Lichtstrahlebene (E) derart angeordnet werden kann, dass der Oberflächenbereich (6) auf welchen das Licht projiziert wird und/oder das zylindrische Bauteil (8) in einer senkrecht zu dessen Längsachse (L) orientierten Querrichtung (Q) vollständig in dem Bild der Bilderfassungseinheit (12) abbildbar ist.

4. Vorrichtung (2) nach einem der vorhergehenden Ansprüche, wobei die Lichtquelle (10) und die Bilderfassungseinheit (12) innerhalb eines Gehäuses (14) angeordnet sind, welches in einem Sichtfeld der Bilderfassungseinheit (12) und/oder entlang der Lichtstrahlebene (E) des von der Lichtquelle (10) emittierten Lichtes eine Öffnung (18) und/oder einen lichtdurchlässigen Bereich aufweist.

5. Verfahren zur Erfassung und/oder Untersuchung eines Abtrages (4) an einer Oberfläche eines zylindrisches Bauteils (8), insbesondere eines stabförmigen Bauteils eines Kernkraftwerkes, insbesondere eines Brennstabes, eines Steuerstabes, eines Neutronenquellenstabes, eines Absorberstabes und/oder eine Lanze, insbesondere mit einer Vorrichtung (2) nach einem der vorhergehenden Ansprüche, wobei mit einer Lichtquelle (10) Licht erzeugt und auf einen Oberflächenbereich (6) des zylindrischen Bauteils (8) projiziert wird, und wobei eine Bilderfassungseinheit (12) ein Bild von dem Oberflächenbereich (6) des zylindrischen Bauteils (8) erfasst, auf welchen das Licht projiziert wird, wobei die Lichtquelle (10) eine Spaltlampe ist, die Licht in einer Lichtstrahlebene (E) emittiert, und die Lichtstrahlebene (E) senkrecht zu einer Längsachse (L) des zylindrischen Bauteils (8) orientiert ist, und wobei die optische Achse (A) der Bilderfassungseinheit (12) unter einem Winkel (a) zu der Lichtstrahlebene (E) der Spaltlampe orientiert ist, und **dadurch gekennzeichnet, dass** mit einer Auswerteeinheit anhand einer Abweichung der tatsächlichen Oberfläche des in dem Bild erfassten Oberflächenbereichs (6) von einer idealen zylindrischen Oberfläche des zylindrischen Bauteils (8) ein Ausmaß eines Abtrages (4) ermittelt wird, wobei der mit der Lichtquelle (10) beleuchtete und mit der Bilderfassungseinheit (12) erfasste Oberflächenbereich (6) zumindest einen abtragsfreien Teilabschnitt (22a) aufweist und wobei durch die Auswerteeinheit anhand des in dem Bild erfassten Teilabschnittes (22a') eine die Oberfläche des zylindrischen Bauteils (8) in einem Soll-Zustand abbildende Funktion ermittelt wird.

6. Verfahren nach Anspruch 5, wobei in dem Bild der Bilderfassungseinheit (12) der Oberflächenbereich (6) auf welchen das Licht projiziert wird und/oder das zylindrische Bauteil (8) in einer senkrecht zu der Längsachse (L) orientierten Querrichtung (Q) vollständig erfasst wird.

7. Verfahren nach einem der Ansprüche 5 oder 6, wobei die einen Soll-Zustand abbildende Funktion eine Ellipsenfunktion ist.

8. Verfahren nach Anspruch 7, wobei durch die Auswerteeinheit aus der die Oberfläche des zylindrischen Bauteils (8) in einem Soll-Zustand abbildenden Funktion, insbesondere der Ellipsenfunktion, und einem realen Soll-Radius (R_{A}) des zylindrischen Bauteils (8) ein Kalibrierfaktor für das Verhältnis zwischen einem Soll-Radius (R'_{A}) in der Bilddarstellung und dem realen Soll-Radius (R_{A}) ermittelt wird, wobei der reale Soll-Radius ein tatsächlicher und aufgrund der zylindrischen Form über das gesamte Bauteil konstanter Außenradius des Bauteils ist.

9. Verfahren nach Anspruch 8, wobei der mit der Lichtquelle (10) beleuchtete und mit der Bilderfassungseinheit (12) erfasste Oberflächenbereich (6) zumindest einen, einen Abtrag (4) aufweisenden Teilabschnitt (22b) aufweist und wobei durch die Auswerteeinheit (12) anhand des in dem Bild erfassten Teilabschnittes (22b') an einer Position (P) des Teilabschnittes (22b') ein Ist-Radius (R'_{P}) ermittelt wird und anhand eines für die Position (P') ermittelten Kalibrierfaktors ein dem Ist- Radius (R'p) in der Bilddarstellung entsprechender realer Ist-Radius (Rp) des zylindrischen Bauteils (8) ermittelt wird.

10. Verfahren nach Anspruch 9, wobei ein realer Ist-Radius (R_{P1}, R_{P2}) für zumindest zwei in Querrichtung (Q) voneinander beabstandete Positionen (P1, P2) und/oder für zumindest zwei Positionen, die in in Längsrichtung voneinander beabstandeten Ebenen (E1, E2) liegen, ermittelt wird, um eine Kontur des Abtrages (4) zu untersuchen.

## Claims

1. Device (2) for detecting and/or examining an abrasion (4) on a surface of a cylindrical component (8), in particular of a rod-shaped component of a nuclear power plant, in particular a fuel rod, a control rod, a neutron source rod, an absorber rod and/or a lance, comprising
_ a light source (10) for projecting light onto a surface region (6) of the cylindrical component (8), wherein the light source (10) is a split lamp, which emits light on a light emission plane (E), and the light source (10) can be arranged relative to the cylindrical component (8) such that the light emission plane (E) is oriented perpendicular to a longitudinal axis (L) of the cylindrical component (8), and
_ an image capturing unit (12), in particular a camera for capturing an image of the surface region (6) onto which light is projected, and/or for examining the surface region (6) of the cylindrical component (8), wherein the optical axis (A) of the image capturing unit (12) is oriented at an angle (a) relative to the light emission plane (E) of the light source (10), **characterised in that** the device (2) comprises an analysis unit for determining the extent of an abrasion (4) by means of a deviation of the actual surface of the surface region (6) captured in the image from an ideal cylindrical surface of the cylindrical component (8), wherein the analysis unit is configured to determine an imaging function for the surface of the cylindrical component (8) in a target condition, by means of an abrasion-free section (22a') captured in the image.

2. Device (2) according to any of claims 1, wherein the image capturing unit (12) is arranged relative to the light source (10) such that a vertical projection (M_{B}) of the optical axis (A) of the image capturing unit (12) on the light emission plane (E) extends congruently with a central longitudinal axis (M_{L}) of the light emission plane (E) of the light source (10).

3. Device (2) according to any of the preceding claims, wherein the image capturing unit (12) is arranged at a distance (s) from the cylindrical component (8) and/or at a distance (h) from the light emission plane (E) such that the surface region (6) onto which the light is projected and/or the cylindrical component (8) can be depicted entirely in the image of the image capturing unit (12) in a transverse direction (Q) oriented perpendicular to its longitudinal axis (L).

4. Device (2) according to any of the preceding claims, wherein the light source (10) and the image capturing unit (12) are arranged inside a housing (14), which has an opening (18) and/or a transparent region in a field of view of the image capturing unit (12) and/or along the light emission plane (E) of the light emitted by the light source (10).

5. Method for detecting and/or examining an abrasion (4) on a surface of a cylindrical component (8), in particular of a rod-shaped component of a nuclear power plant, in particular a fuel rod, a control rod, a neutron source rod, an absorber rod and/or a lance, in particular having a device (2) according to any of the preceding claims, wherein light is provided by a light source (10) and projected onto a surface region (6) of the cylindrical component (8), and wherein an image capturing unit (12) captures an image of the surface region (6) of the cylindrical component (8), onto which the light is projected, wherein the light source (10) is a split lamp, which emits light on a light emission plane (E), and the light emission plane (E) is oriented perpendicular to a longitudinal axis (L) of the cylindrical component (8), and wherein the optical axis (A) of the image capturing unit (12) is oriented at an angle (a) relative to the light emission plane (E) of the split lamp, and **characterised in that** an extent of an abrasion (4) is determined with an analysis unit by means of a deviation of the actual surface of the surface region (6) captured in the image from an ideal cylindrical surface of the cylindrical component (8), wherein the surface region (6) illuminated by the light source (10) and captured with the image capturing unit (12) has at least one abrasion-free section (22a) and wherein, by means of the section (22a') captured in the image, an imaging function is determined for the surface of the cylindrical component (8) in a target condition by the analysis unit.

6. Method according to claim 5, wherein, in the image of the image capturing unit (12), the surface region (6) onto which the light is projected and/or the cylindrical component (8) are captured entirely in a transverse direction (Q) oriented perpendicular to the longitudinal axis (L).

7. Method according to any of claims 5 or 6, wherein the target condition imaging function is an ellipse function.

8. Method according to claim 7, wherein a calibration factor for the ratio between a target radius (R'_{A}) in the image display and the real target radius (R_{A}) is determined by the analysis unit from the imaging function for the surface of the cylindrical component (8) in a target condition, in particular the ellipse function, and a real target radius (R_{A}) OF THE cylindrical component (8), wherein the real target radius is an actual outer radius of the component, which is constant over the entire component due to the cylindrical form.

9. Method according to claim 8, wherein the surface region (6) illuminated by the light source (10) and captured with the image capturing unit (12) has at least one section (22b) with an abrasion (4) and wherein an actual radius (R'_{P}) is determined by the analysis unit (12) by means of the section (22b') captured in the image at a position (P) of the section (22b') and a real actual radius (R_{P}) of the cylindrical component (8) corresponding to the actual radius (R'_{P}) in the image display is determined by means of a calibration factor determined for the position (P').

10. Method according to claim 9, wherein a real actual radius (R_{P1}, R_{P2}) is determined for at least two positions (P1, P2) spaced apart from one another in a transverse direction (Q) and/or for at least two positions, which lie in planes (E1, E2) spaced apart from one another in a longitudinal direction, in order to examine a contour of the abrasion (4).

## Revendications

1. Dispositif (2) pour détecter et/ou analyser un enlèvement (4) sur une surface d'une pièce cylindrique (8), en particulier d'une pièce en forme de barre d'une centrale nucléaire, en particulier d'une barre de combustible, d'une barre de commande, d'une barre source de neutrons, d'une barre absorbante et/ou d'une lance, comprenant
- une source de lumière (10) pour la projection de lumière sur une zone de surface (6) de la pièce cylindrique (8), dans lequel la source de lumière (10) est une lampe à fente, qui émet de la lumière dans un plan de rayonnement de lumière (E), et la source de lumière (10) peut être disposée par rapport à la pièce cylindrique (8) de telle sorte que le plan de rayonnement de lumière (E) est orienté perpendiculairement à un axe longitudinal (L) de la pièce cylindrique (8), et
- une unité d'acquisition d'image (12), en particulier une caméra pour l'acquisition d'une image de la zone de surface (6) sur laquelle de la lumière est projetée, et/ou pour l'analyse de la zone de surface (6) de la pièce cylindrique (8), dans lequel l'axe optique (A) de l'unité d'acquisition d'image (12) est orienté selon un angle (a) par rapport au plan de rayonnement de lumière (E) de la source de lumière (10),
**caractérisé en ce que** le dispositif (2) comprend une unité d'évaluation pour la détermination de la dimension d'un enlèvement (4) sur la base d'une différence entre la surface véritable de la zone de surface (6) acquise dans l'image et une surface cylindrique idéale de la pièce cylindrique (8), dans lequel l'unité d'évaluation est conçue pour déterminer sur la base d'une section partielle (22a') exempte d'enlèvement acquise dans l'image une fonction reproduisant dans un état théorique la surface de la pièce cylindrique (8).

2. Dispositif (2) selon l'une quelconque des revendications 1, dans lequel l'unité d'acquisition d'image (12) est disposée par rapport à la source de lumière (10) de telle sorte qu'une projection verticale (M_{B}) de l'axe optique (A) de l'unité d'acquisition d'image (12) sur le plan de rayonnement de lumière (E) s'étend en coïncidence avec un axe longitudinal médian (M_{L}) du plan de rayonnement de lumière (E) de la source de lumière (10).

3. Dispositif (2) selon l'une quelconque des revendications précédentes, dans lequel l'unité d'acquisition d'image (12) peut être disposée à une distance (s) par rapport à la pièce cylindrique (8) et/ou à une distance (h) par rapport au plan de rayonnement de lumière (E), de telle sorte que la zone de surface (6) sur laquelle la lumière est projetée et/ou la pièce cylindrique (8) peut être reproduite entièrement dans l'image de l'unité d'acquisition d'image (12) dans une direction transversale (Q) orientée perpendiculairement à l'axe longitudinal (L) de celle-ci.

4. Dispositif (2) selon l'une quelconque des revendications précédentes, dans lequel la source de lumière (10) et l'unité d'acquisition d'image (12) sont disposées à l'intérieur d'un boîtier (14), lequel présente dans un champ de vision de l'unité d'acquisition d'image (12) et/ou le long du plan de rayonnement de lumière (E) de la lumière émise par la source de lumière (10) une ouverture (18) et/ou une zone transparente.

5. Procédé pour détecter et/ou analyser un enlèvement (4) sur une surface d'une pièce cylindrique (8), en particulier d'une pièce en forme de barre d'une centrale nucléaire, en particulier d'une barre de combustible, d'une barre de commande, d'une barre source de neutrons, d'une barre absorbante et/ou d'une lance, en particulier avec un dispositif (2) selon l'une quelconque des revendications précédentes, dans lequel de la lumière est produite avec une source de lumière (10) et projetée sur une zone de surface (6) de la pièce cylindrique (8), et dans lequel une unité d'acquisition d'image (12) acquiert une image de la zone de surface (6) de la pièce cylindrique (8) sur laquelle la lumière est projetée, dans lequel la source de lumière (10) est une lampe à fente, qui émet de la lumière dans un plan de rayonnement de lumière (E), et le plan de rayonnement de lumière (E) est orienté perpendiculairement à un axe longitudinal (L) de la pièce cylindrique (8), et dans lequel l'axe optique (A) de l'unité d'acquisition d'image (12) est orienté selon un angle (a) par rapport au plan de rayonnement de lumière (E) de la lampe à fente, et **caractérisé en ce qu'**une dimension d'un enlèvement (4) est déterminée avec une unité d'évaluation sur la base d'une différence entre la surface véritable de la zone de surface (6) acquise dans l'image et une surface cylindrique idéale de la pièce cylindrique (8), dans lequel la zone de surface (6) éclairée avec la source de lumière (10) et acquise avec l'unité d'acquisition d'image (12) présente au moins une section partielle (22a) exempte d'enlèvement et dans lequel une fonction reproduisant la surface de la pièce cylindrique (8) dans un état théorique est déterminée par l'unité d'évaluation sur la base de la section partielle (22a') acquise dans l'image.

6. Procédé selon la revendication 5, dans lequel la zone de surface (6) sur laquelle la lumière est projetée et/ou la pièce cylindrique (8) dans une direction transversale (Q) orientée perpendiculairement à l'axe longitudinal (L) est acquise entièrement dans l'image de l'unité d'acquisition d'image (12).

7. Procédé selon l'une quelconque des revendications 5 ou 6, dans lequel la fonction reproduisant un état théorique est une fonction elliptique.

8. Procédé selon la revendication 7, dans lequel un facteur d'étalonnage pour le rapport entre un rayon théorique (R'_{A}) dans la représentation d'image et le rayon théorique réel (R_{A}) est déterminé par l'unité d'évaluation à partir de la fonction reproduisant la surface de la pièce cylindrique (8) dans un état théorique, en particulier la fonction elliptique, et un rayon théorique réel (R_{A}) de la pièce cylindrique (8), dans lequel le rayon théorique réel est un rayon extérieur de la pièce véritable et constant sur toute la pièce en raison de la forme cylindrique.

9. Procédé selon la revendication 8, dans lequel la zone de surface (6) éclairée avec la source de lumière (10) et acquise avec l'unité d'acquisition d'image (12) présente au moins une section partielle (22b) présentant un enlèvement (4) et dans lequel un rayon réel (R'_{P}) est déterminé par l'unité d'évaluation (12) sur la base de la section partielle (22b') acquise dans l'image au niveau d'une position (P) de la section partielle (22b') et un rayon effectif réel (Rp) de la pièce cylindrique (8) correspondant au rayon effectif (R'_{P}) dans la représentation d'image est déterminé sur la base d'un facteur d'étalonnage déterminé pour la position (P').

10. Procédé selon la revendication 9, dans lequel un rayon effectif réel (R_{P1}, R_{P2}) pour au moins deux positions (P1, P2) espacées l'une de l'autre dans la direction transversale (Q) et/ou pour au moins deux positions qui se situent dans des plans (E1, E2) espacés l'un de l'autre dans la direction longitudinale est déterminé, afin d'analyser un contour de l'enlèvement (4).
